# EUROPEAN PATENT APPLICATION

(11) **EP 0 917 120 A2**
(43) Date of publication of application: **19.05.1999**
(21) Application number: 98203778.0
(22) Date of filing: 10.11.1998
(51) Int. Cl.: G07F 19/00, G06F 17/60, H04L 29/06

(54) **Virtual wallet system**

(30) Priority: 12.11.1997 US 65291 P; 14.04.1998 US 81748 P
(71) Applicant: Citicorp Development Center, Inc., Los Angeles, California 90066 (US)
(72) Inventor: Paltenghe, Chris T., Northridge, CA 91326 (US); Mamdani, Alnoor B., Venice, CA 90291 (US); Golvin, Charles, Los Angeles, CA 90064 (US); Lichstein, Henry, Santa Monica, CA 90402 (US); Solo, David, New York, NY 10021 (US); Pan, Jack, Rowland Heights, CA 91748 (US); Takata, Melvin M., Thousand Oaks, CA 91360 (US)
(74) Representative: Hynell, Magnus

(57) **Abstract**

The present invention provides apparatus, methods and systems for information and financial banking. Apparatus of the present invention include virtual wallets which allow for information and financial banking including payment mechanisms; identity authentication mechanisms; personal information; and electronic artifacts. Methods and systems of the present invention include information and financial banking methods utilizing virtual wallets. A preferred virtual wallet comprises a locally residing portion and a server residing portion. An interface is provided for communication between the two portions of the wallet.

## Description

### Cross-reference to Related Applications

The present application claims priority under 35 USC 119(e) from US Provisional Patent Application No. 60/065,291 entitled "DISTRIBUTED NETWORK BASED ELECTRONIC WALLET," filed November 12, 1997 and from US Provisional Patent Application No. 60/081,748 entitled "VIRTUAL WALLET SYSTEM" filed April 14, 1998. The disclosures of each referenced application is hereby incorporated herein by reference.

### Field of the Invention

The present invention relates to apparatus, systems and methods for information and financial banking. Particular features of the present invention include electronic wallets and computer and related electronic apparatus based systems for the storage, retrieval and management of personal information including personal financial information. An additional feature of the present invention is a system for a digitized signature.

### Background

With the explosion in popularity and utility of the internet and other electronic transaction mediums, the need for and dependence upon information in an electronic format is ever-increasing. The problem of storing, retrieving and managing all of a consumer's electronic data, however, has not yet been satisfactorily analyzed or solved.

Further, the problem is not currently being approached from the consumer's standpoint, but from the standpoint of the vendor looking to solve particular vendor needs. One form of product that deals with some of the above-stated needs are generally called electronic wallets. Typically, current electronic wallets are just an afterthought, however, used by vendors to enhance other products. Generally, an electronic wallet is a software application, on a network or within a browser, that is part of a much larger program. Electronic wallets focus primarily upon the payment aspects of electronic commerce. For example, electronic wallets comprise credit card account information and digital certificates that are used in authorizing electronic transactions that can be performed with the main product sold by the vendor.

Additionally, electronic wallets are typically not universally interoperable. Information added to the electronic wallet application of one vendor may not be able to be used by or accessed from other applications. In fact, a vendor providing a program may require that only the electronic wallet application associated with that program be used. Thus, a consumer is presented with the frustrating task of repeatedly entering and acquiring the data and information necessary to build the components of their electronic wallet.

Further, because current electronic wallets are primarily designed as a part of a bigger application, they typically have narrow functionality. Current electronic wallets generally are only able to hold certain pre-designated types of electronic information, such as credit card account information or digital certificates. Typically, applications utilizing current electronic wallets may only need a payment function, and thus the electronic wallet only provides this function. Generally, the functionality of current electronic wallets is driven by vendor, rather than consumer, needs. On the other hand, a consumer looking to integrate an electronic wallet into all facets of their life needs the ability to store, manage and retrieve varied data from multiple data sources. Thus, there is a need for an electronic wallet that is able to work with electronic data that is chosen based on the electronic wallet owner's needs, not just the needs of a particular software vendor.

Additionally, electronic wallets typically reside either locally with the owner, such as in a smart card or on a personal computer, or remotely such as on a server. There are drawbacks to both residences.

Local residence has the advantage of complete control by the owner and not much resource allocation required by virtual wallet issuer. On the other hand, the local residence of an electronic wallet exposes the owner to the greatest risk of loss, such as if a smart card is lost or stolen or a personal computer hard drive crashes. Further, security, portability and interoperability issues arise when the residence is the personal computer. Networked computers may be hacked into, thus exposing their valuable information. Also, many home computers are not mobile, thus restricting the owner's ability to use the electronic wallet. Finally, local residence in programs such as browsers generally restrict compatibility with other applications in an effort to restrict the owner from conveniently utilizing competing browsers. Thus, local residence has some disadvantages.

A remote electronic wallet typically resides on a server. This option advantageously provides superior information protection, as the server cannot be lost or stolen. Yet, residence on a server inconveniently requires the owner to establish some sort of network connection to access the wallet. Further, remotely accessing the information brings about a problem in authenticating the identity of the individual requesting access. Passwords and Personal Identification Numbers (PINs) may be utilized, however, to increase the protection of the information. Thus, remote residence has some disadvantages.

Therefore, there exists a need to overcome some or all of the above-stated disadvantages of current electronic wallets and provide new apparatus, methods and systems for information banking.

### Summary of the Invention

The present invention provides apparatus, methods and systems for information and financial banking. Apparatus of the present invention include virtual wallets which allow for information and financial banking. Methods and systems of the present invention include information and financial banking methods utilizing virtual wallets.

As used herein, financial banking refers to the banking, investment and securities services traditionally offered by the financial services industry. Information banking or Information-based banking is an extension of the financial metaphor where precious information is stored in a secure place on behalf of the customer. In the present invention, information is treated in a similar manner as currency. Although, "information and value" are better analogs as are "data and currency" to each other, respectively. Examples of vaulted information can include insurance policies, legal documents, medical records, in addition to financial and credit histories.

Under the present invention, a consumer's personal information can be viewed through the use of both theoretical and practical devices which characterize the storage and value appreciation of "currency." For instance, the use of a vault to store currency can be used as a metaphor for storing and protecting information, while the investment of currency can be used as a metaphor for generating value from the transactional use of that information. Thus, the present invention provides an individual with apparatus, systems and methods to vault and invest information.

An embodiment of the present invention is a virtual wallet. Virtual wallets may be thought of as an electronic version of the physical metaphor, the conventional wallet. In one aspect, a virtual wallet of the present invention comprises software, possibly contained in special hardware, that acts as a container, for an owner/user of the virtual wallet, for at least one of the following: payment mechanisms; identity authentication mechanisms; personal information; and electronic artifacts. A virtual wallet of the present invention may also be thought of as comprising an electronic system for the secure storage, retrieval and management of personal information.

As noted above, a virtual wallet of the present invention acts as a container for electronic objects, including but not limited to payment mechanisms, identity authentication mechanisms, personal information, electronic artifacts, and the like of the owner/user of the wallet. These electronic objects are preferably not limited to information from a single source, for example a financial services institution. Instead, a virtual wallet of the present invention may be utilized to hold information from a variety of sources, including multiple financial institutions, and personal information from a variety of sources in order to provide a user with more useful virtual wallet. Many users of conventional wallets use their wallet to contain multiple bank cards, credit cards, personal information, notes, membership cards and the like from a variety of sources. In this regard, a virtual wallet of the present invention is preferably similar to a conventional wallet in terms of the types and kind of information contained in each wallet. similar to a conventional wallet.

According to the present invention, a virtual wallet may comprise one or more of the following features. A virtual wallet of the present invention may allow an owner to personalize its contents, enabling it to store any information the owner likes in a format selected by the owner. Also, an owner of the virtual wallet is able to access its contents where ever the owner may be, which along with the personalized format, maximizes the wallet's convenience. Further, a virtual wallet of the present invention may allow an owner to link information stored in the wallet to other functions, which leverages the utility of the stored information and makes the virtual wallet interoperable with other applications. Additionally, a virtual wallet of the present invention may allow an owner to control access to and distribution of the information in the wallet, thereby giving the owner security and total control over his/her personal information. The virtual wallet systems of the present invention may advantageously feature the offering of rewards to a virtual wallet owner for distributing their information. A further feature of a virtual wallet of the present invention is that the wallet may comprise a mechanism or mechanisms that eliminate the risk of loss of the information in the wallet by remotely storing and/or disabling the wallet contents. In this way, a virtual wallet of the present invention may advantageously comprise a trusted place to keep information and valuable financial items, as well as a convenient way to move around information.

Payment mechanisms stored in the virtual wallet may comprise bank account information, credit account information, electronic currency, electronic checks and debit cards, for example. Identity authentication mechanisms stored in the virtual wallet include personal identification information and authentication information. Personal identification information may comprise, for example, name, home address, work address, home phone, work phone, emergency contact information, and biometric information. Authentication information may comprise objects such as certificates, access keys and biometric information. Personal information and artifacts of the owner that are stored in the virtual wallet may comprise, for example, the personal identification information as stated above, other personal phone numbers and addresses, appointments and reminders, personal preferences and interests, loyalty credits, coupons, pictures, tokens and tickets. The above objects are just examples of some of the exhaustive capabilities of the virtual wallet. After reading this specification other examples will be obvious to those skilled in the art.

An advantage of a virtual wallet of the present invention is that the virtual wallet may include information from a variety of sources. Further the information from different sources may interact. For example, in a virtual wallet of the present invention which includes a frequent flyer type credit card the wallet owner would be able to manage and track both credit card information and the added value function of managing and tracking frequent flyer miles. In addition, an eclectic wallet, such as a virtual wallet of the present invention, may allow consumers to add items that are not affiliated with the wallet issuer. Allowing any item to be added to the wallet is advantageous to the consumer and other application vendors.

Another advantage of a virtual wallet of the present invention is that the virtual wallet may advantageously be a trusted place to keep information and valuable financial items. Currently there are many founded and unfounded consumer fears regarding privacy and the safety of electronic transactions. If given a choice, it seems logical that consumers would rather store their sensitive information with someone that already has a reputation for trust and consumer advocacy than a suspicious third party. In a world where information is increasingly gathered on consumers in secret, marketed, and sold, an explicit policy of privacy protection and safety is a powerful inducement to hold a virtual wallet from a financial institution. Further, there is not only value in having consumer information, but value in moving it around as well. Also like money, information can be invested to provide - increasing returns. Information must also be protected, which give rise to the concepts of information vaults and safety deposit boxes. The central issue of privacy is turned into an opportunity, and is at the core of information banking.

A further advantage of a virtual wallet of the present invention is that the virtual wallet provides a convenient way to move information around. As explained in more detail in our copending application entitled "DISTRIBUTED NETWORK BASED ELECTRONIC WALLET" (Methods and Systems for Information Banking), filed the same day as the present application and assigned serial number, , the disclosure of which being hereby incorporated herein by reference, a simple service of enormous convenience is to help consumers fill out forms from their personal data that resides in the information bank via their wallet. Whether a loan application, a site registration, a job application, once the information is known, there is no reason that a consumer would have to type it in again, even though it might be for different reasons, or in a different order. A further feature is that the owner of a virtual wallet may be able to have multiple answers for the same question, depending on the persona that they wish to represent at the time (social vs. work, for example).

A further advantage of a virtual wallet of the present invention is that the virtual wallet provides for selective loss, theft, and disaster recoverability. Many of the current wallet designs have deficiencies when the wallet is lost, stolen, or destroyed by disaster. It would be advantageous for a consumer to know that given one of these unfortunate mishaps, their life is not ruined. In an embodiment of a system of the present invention a new virtual wallet may be issued with no loss or corruption of data. Should the wallet be stolen, the thief will have little opportunity to make use of the information, and the wallet keys can be disabled remotely without affecting the consumers account status or the items in the wallet.

Another further advantage of a virtual wallet of the present invention is that the virtual wallet may allow for nomadic access. Current wallet designs confine one not only to the machine upon which they received their wallet items (notably certificates), but to the particular browser that obtained them. This makes it very inconvenient to a consumer if they acquire a SET certificate at home and then wish to use it at work. The present invention provides a solution is nomadic and allows the wallet to be used wherever the consumer happens to be.

A further advantage of a virtual wallet of the present invention is that the virtual wallet may be a shopping aid. One result of having consumer information is the ability to infer what they are interested in. The virtual wallet system of the present invention may allow the wallet issuer the opportunity to become a trusted electronic broker that will help consumers find what they want to buy. A further consequence is the ability to also become the consumer's electronic valet and filter out unwanted spam by knowing what they are not interested in. By recognizing that payment is only a part of commerce, and addressing other parts of commerce a virtual wallet of the present invention provides additional advantages to both a consumer and a wallet issuer.

A still further advantage of a virtual wallet of the present invention is that the virtual wallet may be an information organizer. In this regard, the virtual wallet of the present invention provides a convenient and useful way to manage and organize personal information. Further, the personal information systems of the virtual wallet of the present invention may advantageously form part of the protected information bank.

Another still further advantage of a virtual wallet of the present invention is that the virtual wallet may generate financial and non-financial rewards. In an embodiment of the present invention, part of a wallet package could be a rewards feature based upon several possible strategies. The first strategy makes discounts and special offers available to holders of the wallets. This is a familiar technique to financial service providers and is not a radical departure from what is already done today with cards and membership programs. Typically, however, the discounts and offers are of a broadcast nature and may not necessarily match a given consumers real interests. Hence, some cost of delivering the discount and offer information is wasted on consumers that are not interested.

A bolder strategy, made possible by the virtual wallet systems of the present invention, encourages consumers to make their demographics and interests available by pairing their information account (the stuff in their wallet) with a financial account. Initially, consumers are instructed to specify those things they are interested in, and an electronic shopping agent will report back to them on what it finds. The consumer interests are then categorized into profiles, less their identities, and put into a database. Instead of selling profiled mailing lists, which is perceived in a negative light by consumers, marketers would pay to have an electronic advertisement delivered to virtual wallet users of a given profile.

The information bank behind the wallet preserves the consumer's identity, while making valuable information available to marketers. These types of marketing responses are perceived as less of an intrusion to privacy since the consumer has indicated their interest by submitting a search for an item.

The value proposition of the wallet is that a portion of the money received from the marketers for delivery is passed on to the consumer into their associated financial account. In effect, the marketers are paying a consumer for their time to consider an offer. Because the marketing messages are screened through the consumer's individual profiles, the consumer will not be receiving anything that is grossly dissonant from their stated interests. Marketers will be able to get an aggregate count of how many individuals match the requested profile and a price quotation prior to an investment in delivering the ad. This allows them to refine their profile definition and tailor their marketing messages prior to large outlays of cash. This is clearly a win-win scenario for both the consumers and the marketers. The wallet interface metaphor can be used to help the consumer track their returned value, and to enable them to move their information in and out of the "vault" area to the "information investment' area where the information is made available to profile searches.

A variant of this concept recompenses the consumers with non-monetary rewards such as loyalty credits. Loyalty credits can legitimately have a higher perceived value than a cash equivalent. Currently, loyalty programs of high demand (e.g. frequent flyer miles) are typically limited to large companies, and the rewards are not very liquid. In addition to receiving loyalty credits in return for viewing marketing messages, a virtual wallet provider could also offer a brokerage and exchange service to "swap" various loyalty credits for others. This is consistent with increasing the velocity of exchange philosophy and has an overall beneficial impact on the aggregate of loyalty programs. Suppliers benefit because they can relieve their debt faster. The "loyalty" objective is still met since consumers will join loyalty programs for products they intend to buy frequently anyway. The overall value becomes higher to a consumer because their flexibility of what they can exchange the credits for has increased, and the potential loss of earned credits due to expiration dates is reduced. Another clear win-win for consumers and marketers via the same mechanism.

Further details relating to the present invention are set forth in the appended figures and the following description.

### Brief Description of the Drawings

Figure 1 is a schematic representation of an embodiment of a virtual wallet system of the present invention.

Figure 2 is another schematic representation of an embodiment of a virtual wallet system of the present invention.

Figure 3 is a schematic representation of an embodiment of an electronic wallet architecture according to the present invention.

Figure 4 is another schematic representation of an embodiment of an electronic wallet architecture according to the present invention.

Figure 5 is a flowchart of an intermediated transaction function of the present invention.

Figure 6 is a flowchart of a wallet open for payment function of the present invention.

Figure 7 is a flowchart of a publish public key function of the present invention.

Figure 8 is a flowchart of a purchase with coupons function of the present invention.

Figure 9 is a flowchart of a ticket purchase and use function of the present invention.

Figure 10 is a schematic diagram of the contents of an example virtual wallet of the present invention.

Figure 11 is a diagram of an example virtual wallet system of the present invention.

Figure 12 is a schematic representation of JAVA API's which may be utilized in the example virtual wallet system of the present invention.

### Detailed Description of the Invention

The present invention provides apparatus, systems and methods that allow an individual to manage their financial and personal information. An embodiment of the present invention is referred to herein as a virtual wallet. The present invention includes virtual wallets, virtual wallet systems and methods utilizing virtual wallets.

Embodiments and features of the present invention are described in detail with reference to the appended Figures.

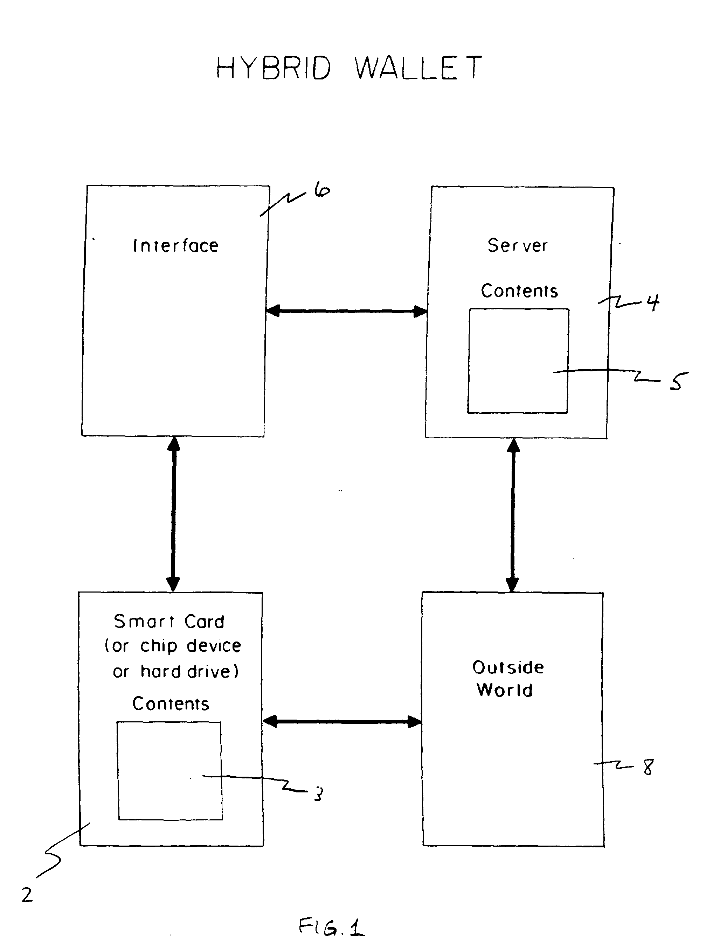

Figure depicts a possible embodiment of the present invention. Referring to Figure 1 according to the present invention a virtual wallet may comprise a hybrid between a wallet that resides locally with the owner, 2 and a wallet that resides remotely, such as with a server, 4. A virtual wallet system further includes an interface, 6 between the local function, 2 and the server, 4. The virtual wallet system may interact with the outside world, 8 through local wallet 2 and/or the server 4. The hybrid virtual wallet combines the portability, owner control and minimized issuer resource aspects of a local wallet with the security and storage capability of a remote wallet. Thus, the hybrid virtual wallet advantageously optimizes the advantages of each type of residence. In the following discussion, the local residence or portion of the wallet may be referred to by these names or as a "client". The remote portion of the wallet may be referred to by this name or as a "server".

The local residence of the wallet may comprise, for example, the owner's personal computer, smart card, or other similar device that enables the wallet to be utilized off-line. Typically, the local aspect of the virtual wallet, the local contents, 3 comprises data and information determined by the wallet owner to be important, while the entire wallet is contained remotely. For example, the local aspect of the virtual wallet may comprise stored value purses, important personal and authentication information, and account information enabling the local aspect of the virtual wallet to emulate any of the functionality contained within the entire wallet. The owner advantageously is able to define and have access to the most important aspects of the wallet in a convenient package that can be remotely utilized. Preferably, the local aspect of the wallet is mirrored on the remote wallet or server, thus protecting the information in case the card has to be replaced. Additionally, the local aspect of the wallet comprises a certificate or other similar authentication instrument that allows the owner to remotely gain access to the entire virtual wallet on the server. Thus, the owner can still have access to all of the wallet functionality at sites where the local aspect of the wallet can be linked to the server.

The remote aspect of the virtual wallet advantageously provides security for all of the information in the wallet. The server also provides greater storage capacity for information compared to a smart card or personal computer, for example. The contents 5, of the remote aspect of the virtual wallet comprises the entire wallet, which may be in part mirrored in a local aspect of the virtual wallet. The remote aspect of the virtual wallet, however, may not completely mirror cash and cash-like objects in the local aspect of the wallet due to off-line transactions. The present invention, however, updates the remote aspect of the virtual wallet with the latest information from the local aspect of the virtual wallet when the local wallet is on-line. Additionally, according to an advantageous feature of the present invention, the remote aspect of the virtual wallet provides privacy protection in transactions by replacing the owner's identity and address, for example, with secret information known only to the wallet server. This feature may be utilized, for example, when marketers pay for information regarding various owner habits, preferences, etc., to give away the information without compromising the identity of the owner. Thus, the remote aspect of the virtual wallet provides security and storage capability.

Thus, this embodiment of a virtual wallet of the present invention synergistically combines the most beneficial aspects of local and remote residence into a single virtual wallet. The local aspect of the wallet is used for convenience and off-line transactions, while the remote aspect of the wallet provides for loss and theft protection.

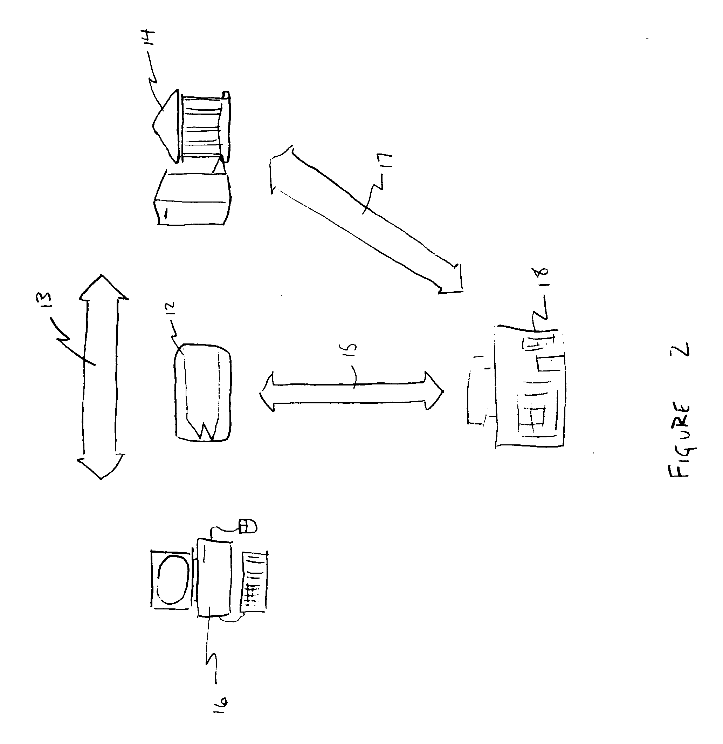

Figure 2 also provides a schematic depiction of a hybrid virtual wallet embodiment of the present invention and a method for using same. As shown in Figure 2, a virtual wallet system may comprise a personal storage device 12, an institutional server 14 and an interface device 16. The personal storage device 12 and institutional server may each interact with the outside world, 18.

The personal storage device may comprise a smart card, personal digital assistant (PDA) or a memory chip device. The personal storage device may also comprise a computer's hard drive or other computer based storage. The preferred embodiment of a personal storage device, whether handheld and easily transportable, or a portion of a computer's hard drive, will depend on the preferences of the user of the wallet.

The personal storage device may include, but is not limited to, one or more of the following types of data: private keys; public keys; account numbers; electronic currency (e-currency); coupons; tokens; tickets; loyalty credits and the like. The functions of the personal storage device may include one or more of the following: authenticating; digital signing; or paying. These data types and functions are described in more detail in the following sections. When the wallet is on a smart card, the consumer becomes truly "nomadic" -- plug in their card wherever they go and have their wallet (and bookmarks!) available all the time. However, there will need to be capabilities built into the clients (and possibly servers) that permit this roaming feature. As the card becomes increasingly important to the consumer, means to replace lost or stolen cards must be developed just like replacement processes for credit cards, licenses, and other physical ID cards. This will be part of the service offered by the truly useful, trusted wallet provider

The interface device need not include data but will generally include at least one of the following functions: user interface interacting; communicating; or public encryption. As will be understood from the foregoing discussion, where the personal storage device comprises a computer's hard disk and the interface device comprises the same computer, the interface device may include the data and functions of the personal storage device.

The institutional server may include the same data as the personal storage device and may further include one or more of the following types of data: certificates; names; addresses; history logs and the like. The institutional server preferably acts as backup means for the personal storage device and therefore may include back-up copies of the data contained on the personal storage device. The institutional server may include one or more of the following functions: authenticating; digital signing; paying; logging; reporting and communicating. These functions and the foregoing data types are described in more detail in the following sections.

As shown in Figure 2 by the large arrow, personal storage device 12, interface device 16 and institutional server 14 may communicate via secure interface interactions 13. In this regard, the interface device provides an interface between the personal storage device 12 and the institutional server 14. Personal storage device 12 may communicate with outside world 18 for purpose of point of sale transactions 15. These transactions include transactions involving the transfer of currency (e.g. a purchase) and also include transactions involving the transfer of personal information. The institutional server portion of the virtual wallet 14 may communicate with outside world 18 via intermediated internet transactions 17. These transactions may be handled in a manner similar to current internet based transactions and involve both the transfer of financial information (financial banking) or personal information (information banking).

From a technology point of view, virtual wallets include software programs that will reside on a smartcard, client PC/PDA/STB and/or on a server. These programs implement at least four components:
User Interface (UI). Interaction between the wallet and its the consumer will be controlled by a user interface component.
Behavior. Behaviors will be things like "pay", "add payment type", "edit personal information," etc. These will be behaviors that are available to wallet owners through the UI. It will represent the capabilities of the wallet.
Protocols. Protocols include SET, Visa Cash, Mondex, OPS (see below). These will be definitions of how the wallet needs to interact with other systems and servers. Various system implementers will provide modules that implement these protocols.
Content. Contents are consumer's specific payment accounts (credit cards, debit cards, cash) and information. This data will be unique to each consumer.

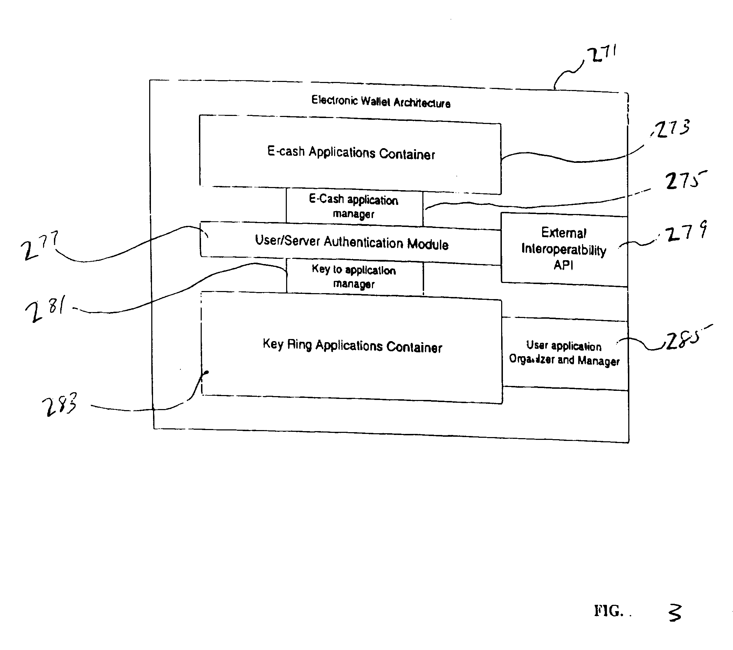

Figure 3 depicts a possible architecture for a virtual wallet system of the present invention 271. As previously noted, the concept of an electronic wallet means many things to many people. One version could be a pocket sized computer with a snap shot-size color screen that will be used in place of many essentials that consumers carry around with them today such as money, keys, identification, credit cards, tickets, as well as items that provide the consumer with mobile information and communications such as a watch, newspapers, calculator, portable telephone, pager, etc. In this embodiment, the wallet 271 is a physical thing that is carried in the pocket. Because of its electronic nature, it can add functionality that the conventional wallet can not perform. However, consumer concerns about this type of device make it impractical. Although it is technically possible to back up the contents of the electronic device, the reality is that consumers would probably be at least as irresponsible with such a device as they are currently with their own data. Further, to the extent that such a wallet interfaces with providers of the wallet or others, there is a security concern in that information about the consumer could be used by others to make a profit and not let the consumer know about it. Thus, extension of the physical wallet, especially those offered by third party software or hardware vendors make rapid adoption unlikely.

At the other end of the spectrum is the totally virtual wallet. It is not a physical device, but a set of applications on a server somewhere. The major disadvantage of this approach is that all transactions have to be "on-line" or connected to a server. This could result in more expensive and/or less convenient use. Another issue is security.

A hybrid approach, and that preferred in accordance with the system of the invention, is to put some data and applications on a physical device and some on a server. A smart card is ideally suited for this type of application since it makes the most sense to put the security and access functions on the card, and to put the volume of data and applications on the server. Further, those transactions that would be too expensive to have on-line, such as small amounts of electronic cash transactions, also makes sense to have on a such a smart-card. Thus, as shown in Figure 3, the electronic wallet 271 in one embodiment is made up of an e-cash applications container 273, an electronic cash application manager 275, a use or authentication module 277, a key to application manager 281, a key ring applications container 283, and external applications interoperability API (applications program interface) 279, and a user application organizer and manager 285.

The e-cash applications container 273, as the name implies, is storage for e-cash applications. In order to gain critical mass, more than one type of e-cash is supported. The storage in container 273 is sufficiently generic to only record each of its members as being some form of e-cash and the actual "object" in the container 273 is a "connector" to the real e-cash application. The programming provides that the e-cash application can be located and started. The e-cash manager 275 is software that provides how to add e-cash applications and use them in a generic manner. The user authentication module 277 can be replaceable to allow for growth in the security and authentication technologies. Prior to implementation of smart cards, it could be software that asks for an account number and personal identification number, but with current technology, it can be implemented using the card and a server, using authentication technology implemented today. For future purposes, alternative security and authentication technologies might use biometrics, etc.

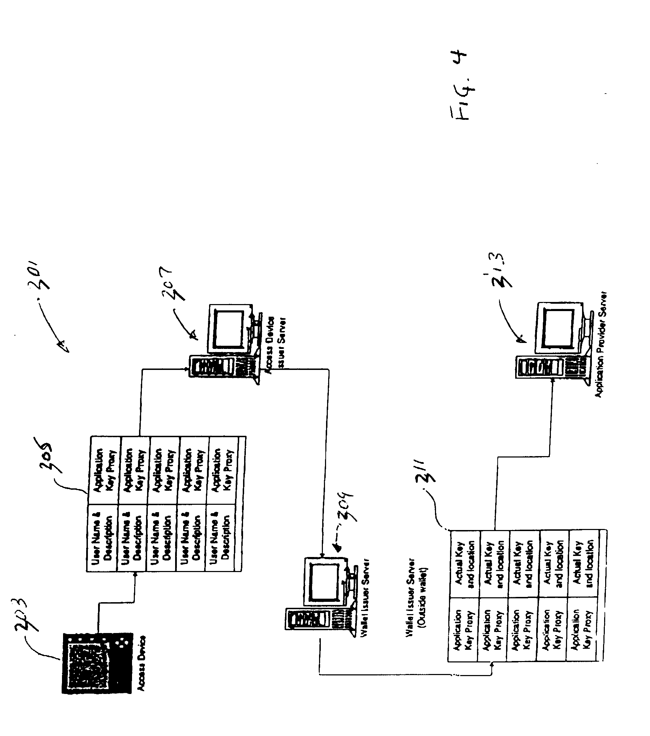

The key to application manager 281 serves to manage non-cash applications in the wallet such as credit, debit, e-checks, identification, facilities access and other applications. This is the software that maintains the contents of the key ring application container 283. The key-ring container 283 holds the connectors to server applications. The contents are managed and maintained by the key to application manager 281 previously described. Even as smart cards become more commonly available, it is believed that they will not be sufficiently large to actually hold the applications. Instead, they will hold "connectors" to the applications that reside on a server. The most important aspect of a "connector" is a key or certificate that helps identify an authorized user of the application. The "key ring" then is a container of keys. They are not like the "real" keys, however, as further illustrated by Figure 4 hereof.

More specifically, Figure 4 illustrates a wallet and application access scheme 301. In this figure, the concept of an access device provider, wallet issuer and application provider have all been separated. As illustrated in Figure 4, a consumer can use an access device 303 to access their information 305. The access device 303 has been provided at point of sale, or point of contact by some party. The wallet then uses the access device 303 and the access device server 307 connection to the network to contact the wallet issuer server 309. The consumer then identifies the appropriate application by their own description. The description is associated to an application key proxy 311 that is sent to the application provider server 313.

In the scheme 301 described, the consumer can access their information via a device 303 provided at point of sale, or point of contact by some party. Since this party will want some presence other than the device 303, some "real estate" is set aside in the presentation interface for their content. The wallet 271 uses the device 303 and the devices server 307 connection to the network 301 to contact the wallet issuer server 309. The consumer, as noted previously, identifies the appropriate application by their own description. The description is associated to an application key proxy 311 that is sent to an issuer server 309. The issuer server 309 authenticates the user and then looks up the location of the application and its real and actual key to be used for access to it. It then connects the consumer to the application at the application server 313 and serves as a secure conduit.

As may be appreciated, proxies are used instead of actual keys in case the card is lost or stolen. In this manner, the coordination with many unaffiliated organizations to issue new keys is eliminated. The issuer simply issues a new card with new proxies on the card.

A number of different features of the present invention, as disclosed in the appended Figures, will now be discussed. In all of the flow charts, each component of the system is identified along the top horizontal axis, and the description of each step is identified along the left vertical axis. Further, the middle of the chart comprises arrows, and sometimes wording, representing interaction among the system components and the flow of information. A double-headed arrow represents a two way flow of dialogue, typically with more detailed dialogue (not shown) occurring at a lower level.

The steps set forth in the flowcharts are performed by a user of the virtual wallet or implemented in computer software residing on the personal storage device, the interface or the institutional server.

### Intermediated Transaction

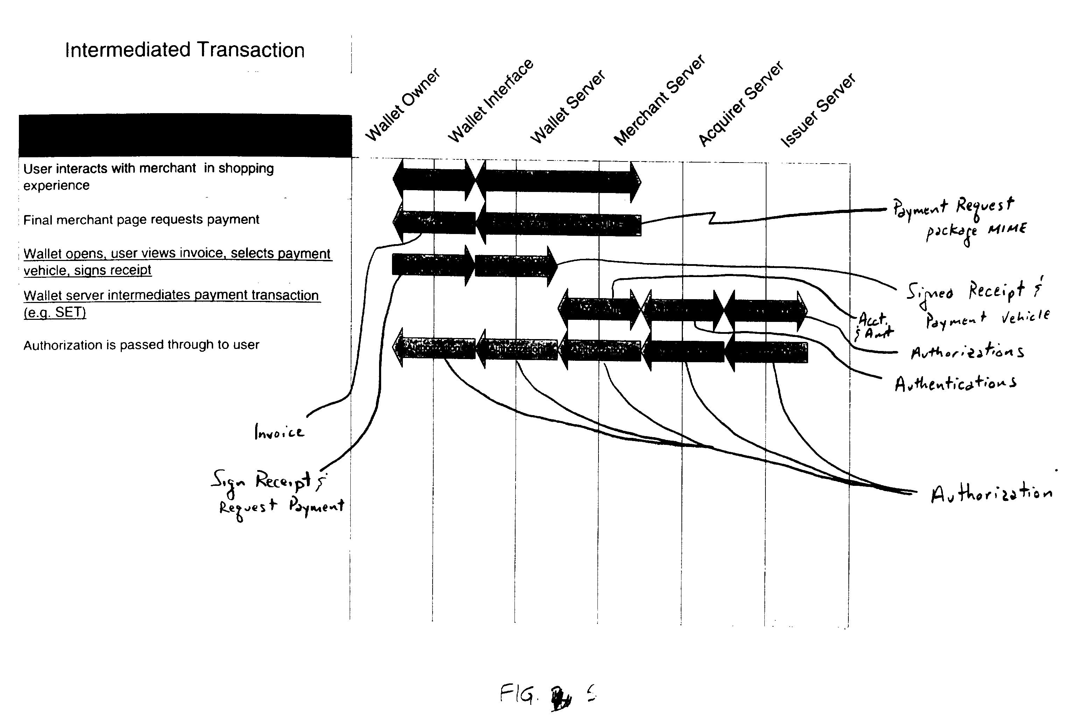

Referring to Fig. 5, one feature of the present invention utilizes a wallet server to supervise a transaction between the virtual wallet and a merchant. For example, the wallet owner may be shopping at a merchant location. The wallet owner decides to purchase an item utilizing the virtual wallet. Utilizing the virtual wallet, the owner sends a purchase request to the merchant. A merchant device, such as a merchant server, receives the purchase request, verifies the item that the wallet owner wishes to purchase and sends a payment request to the wallet owner through the wallet server. The requests may be sent in the Multimedia Internet Mail Extensions (MIME) format, for example. The wallet server then forwards the request in the form of an invoice to the wallet interface, such as a browser or other similar application. The invoice is a package of information comprising, for example, the purchase order information, and the accepted payment mechanisms. Additionally, if this is an internet transaction, the invoice may also contain the URL to the acquirer server, for example. Upon receiving the invoice, the wallet owner views the invoice, selects the method of payment, and signs the invoice receipt. The signed receipt and the selected payment mechanism go back to the wallet server, which intermediates the payment transaction. For example, the wallet server may utilize the Secure Electronic Transaction (SET) protocol, or any other similar transaction protocol, to exchange the payment information such as the wallet owner's account number, the amount of the payment, and the authorizations. Then, the final authorization or rejection is passed through to the wallet owner. Finally, the fulfillment mechanism (not shown) starts and must be received by the wallet owner to complete the transaction.

### Wallet Open for Payment

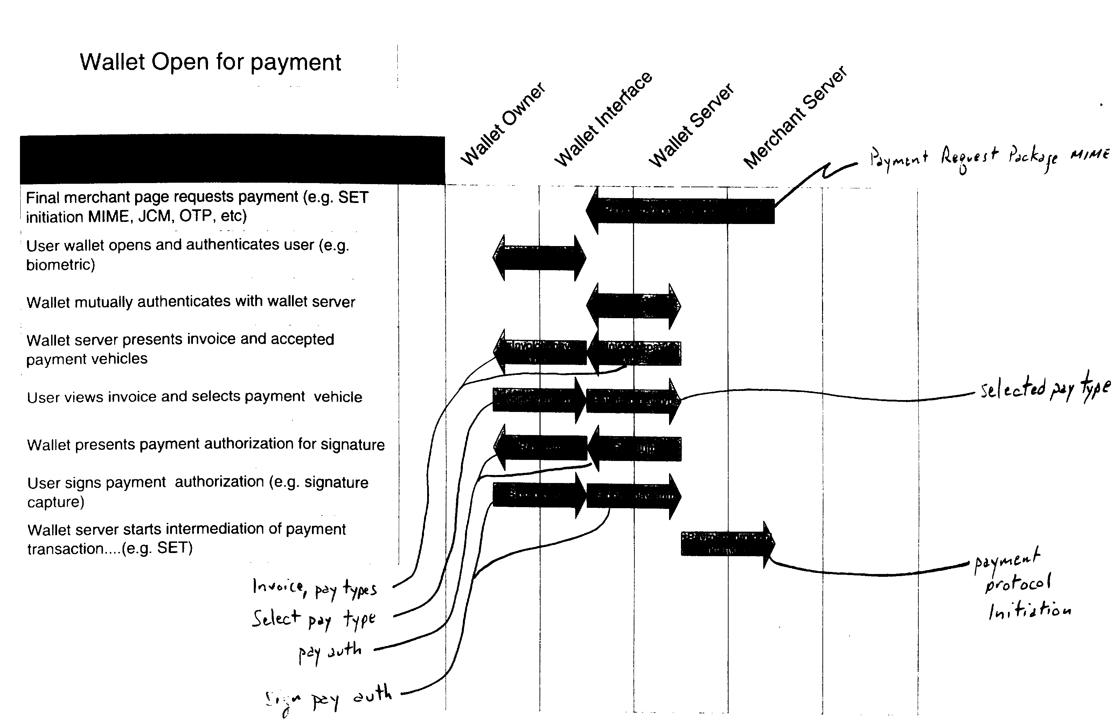

Figure 6 represents the feature where the wallet is opened for payment and a payment request is received by the wallet server. The payment request may be in any format, such as the SET initiation MIME, JCM (JAVA Commerce Message), and Open Trading Protocol (OTP) for example. When the wallet opens, the wallet owner or user must authenticate themself to the wallet so that the wallet knows the correct user is using the wallet interface. The user may authenticate themself utilizing biometric information, PIN and password, or other similar methods. Once the wallet authenticates the user, then the wallet and wallet server must mutually authenticate each other. When the various authentication's are complete, the invoice and payment mechanisms deriving from the payment request are presented to the wallet owner through the wallet server. The wallet owner views the information through the display of the wallet interface and sends the selected payment vehicle back through the wallet server.

Next, the wallet server advantageously provides the wallet owner with a special payment authorization object for signature by the wallet owner. Traditionally, digital signatures are automatically attached to documents once a payment has been approved. In this optional feature of the present invention, however, the wallet owner goes through a step to consciously sign the invoice or receipt. Methods may be provided to capture authorization such as a digital signature.

Finally, the signed document is handled by the wallet server. The wallet server initiates and intermediates the payment transaction utilizing the appropriate protocol, such as SET or other similar protocols.

As discussed above, the method of formatting and transmitting the digital document may vary. For example, one preferred format is the extendible Markup Language (XML). This is a meta language used to describe the formats of other languages. It is a way to organize the format of data in a structured way that can be passed from computer to computer. Similarly, the format may be in Java in the form of an object, or the format may be any other relatively standard way of encapsulating state and behavior.

### Publish Public Key

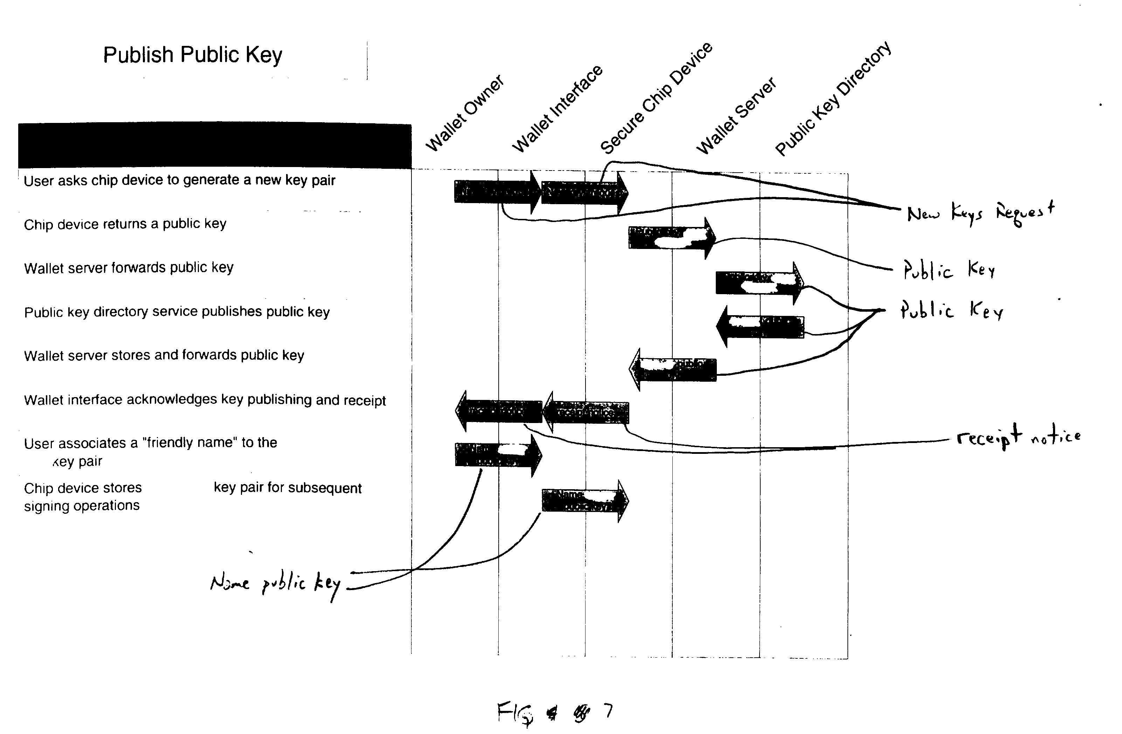

Referring to Figure 7, another advantageous feature of the present invention is the ability to generate, publish and index a public/private key pair. An advantage of a virtual wallet system of the present invention is that the local aspect may generate a public/private key pair. The public key may be published to the server of the wallet, while the private key remains local. This feature helps preserve non-repudiation as the private key is solely in possession of the consumer. In a preferred embodiment, wherein the local residence (client) is a smart card, the private key never leaves the smart card.

This publish public key feature allows a party relying on a signed document to go straight to the issuer of a key to check it's validity, as opposed to having to check a third party's certificate revocation list (CRL). In this case, the wallet owner asks the wallet to generate a new key pair. Alternatively, this may also be a piece of software that is requested. But, in either case there may be multiple active key pairs. The chip device, after it's done the processing, returns the public key and requests from the wallet server an index to associate with it. The wallet server forwards that public key and the index request to the public key directory. This assumes that there may be two different entities -- the wallet server and the public key directory, but they may be under the same legal entity. The public key directory publishes the key and, according to a unique feature of the present invention, returns the index to this key to the wallet server. The wallet server, in turn, returns a copy to the chip device. The chip device then acknowledges the publishing of the key and the receipt of the index to the wallet owner.

Since the index may be some incomprehensible set of numbers, the present invention advantageously allows the wallet owner to associate a "friendly name" or nickname with the index. Since the wallet owner may have multiple signing keys, for different personas or different relationships, it is important for the owner to be able to create a memorable name for each key index. Finally, the chip device securely stores the index with the key pair for future use.

### Sign Digital Document

In operation a signature requester, such as a restaurant, wants the wallet owner to sign a document, such as a receipt. The requester initiates the dialogue and sends a document to the wallet. The wallet designates the document as a signature document for recognition by the software. The wallet server sends the signature document to the wallet interface when it comes on line, thereby supporting both synchronous and asynchronous dialogs. The wallet interface displays the signature document and abstract to the wallet owner for signing. The owner then picks one of their signature key nicknames, or in other words the persona that they are signing with, and they sign the document. This feature of the present invention advantageously manages multiple signature keys.

### Purchase With Coupons

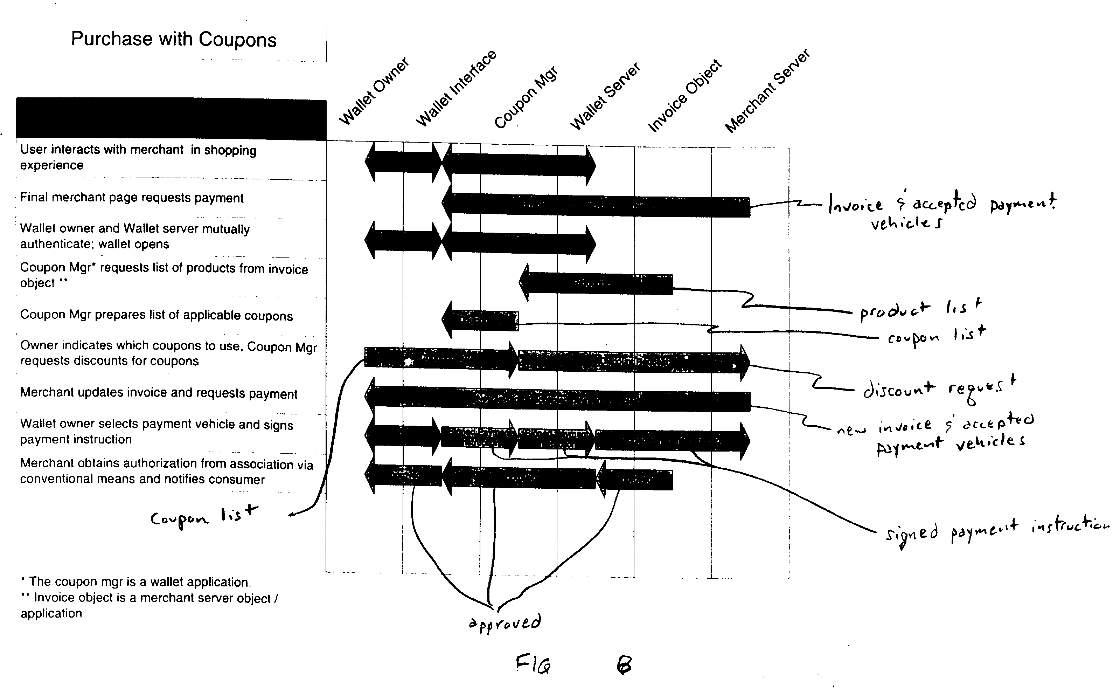

This feature of the present invention, referring to Figure 8, advantageously provides a coupon manager system that collects coupons for the wallet owner and compares and selects appropriate coupons when the wallet owner is presented with a payment request invoice. This system beneficially allows the owner, at one time, to select and collectively redeem all coupons that apply to a particular transaction.

In this case, the wallet owner shops at a merchant and after indicating items to purchase, the merchant server sends a payment request and a list of accepted payment vehicles to the wallet owner. The payment request also comprises an invoice, and an invoice object knows the items and product numbers contained in the invoice. The invoice object delivers that list to the coupon manager, which analyzes the invoice and compares it to a coupon list that contains the coupons held by the wallet owner. After finding matches, the coupon manager prepares a list of applicable coupons and presents this list to the wallet owner. The list is preferably presented all at once, but each applicable coupon may alternatively be presented one at a time. The owner indicates which coupons to use, and the coupon manager sends the list of indicated coupons back to the merchant server as a discount request. Based on the coupons received, the merchant updates the invoice and the merchant server sends an update payment request back to the owner. The wallet owner selects a payment mechanism and signs the payment request, which is forwarded to the merchant. Finally, the merchant authorizes the payment via conventional means, and notifies the owner of the result of the authorization.

Additionally, the coupon manager may suggest alternative purchases to the owner based on having coupons for items that are substitutes or equivalents to the items listed on the invoice. Further, the merchant may provide a coupon presentment option to the owner by offering coupons for equivalent or substitute items, or even the initially indicated items. In either case, the coupon manager presents these options to the owner for approval.

### Ticket Purchase and Use

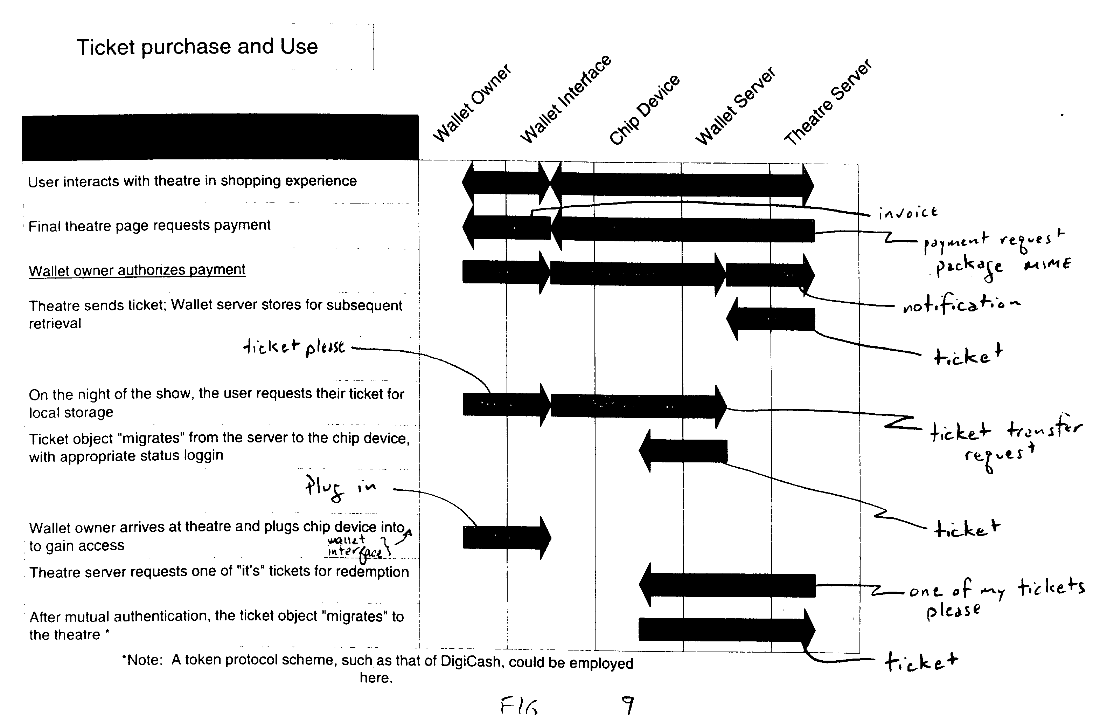

Referring to Figure 9, yet another feature of the present invention allows the wallet owner to purchase, store and use tickets, tokens or other similar transferable items of value. The space between lines in the chart represent the passage of time. In this case, for example, the owner interacts with a theater to purchase a ticket to a show. The theater server requests payment from the owner, who authorizes the payment. Once the theater verifies the payment, the theater server sends the ticket to the wallet server, which stores the ticket for later use. The ticket comprises a migratory object, which is able to be transferred from one location to another. When the owner decides that they want the ticket stored locally, the owner makes a request to the wallet server for local storage of the ticket. The ticket object is then transferred to the secure chip device, such as in a smart card. Upon arriving at the theater, the theater server requests a ticket and the owner plugs the chip device into the wallet interface to access the ticket, or alternatively, into a theater interface. The owner is given access to the theater once the ticket is then transferred to the theater server after a mutual authentication process.

Additional aspects of the present invention, its features, advantages and operation are illustrated in the following example.

### Example

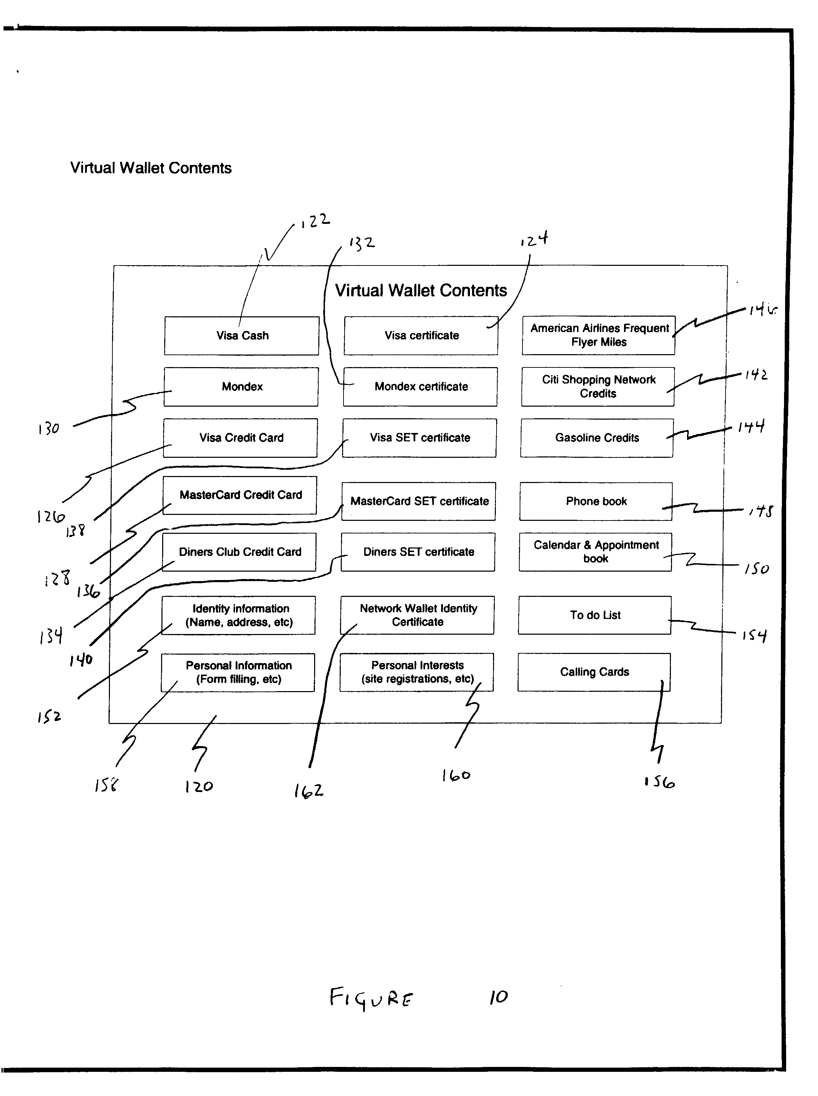

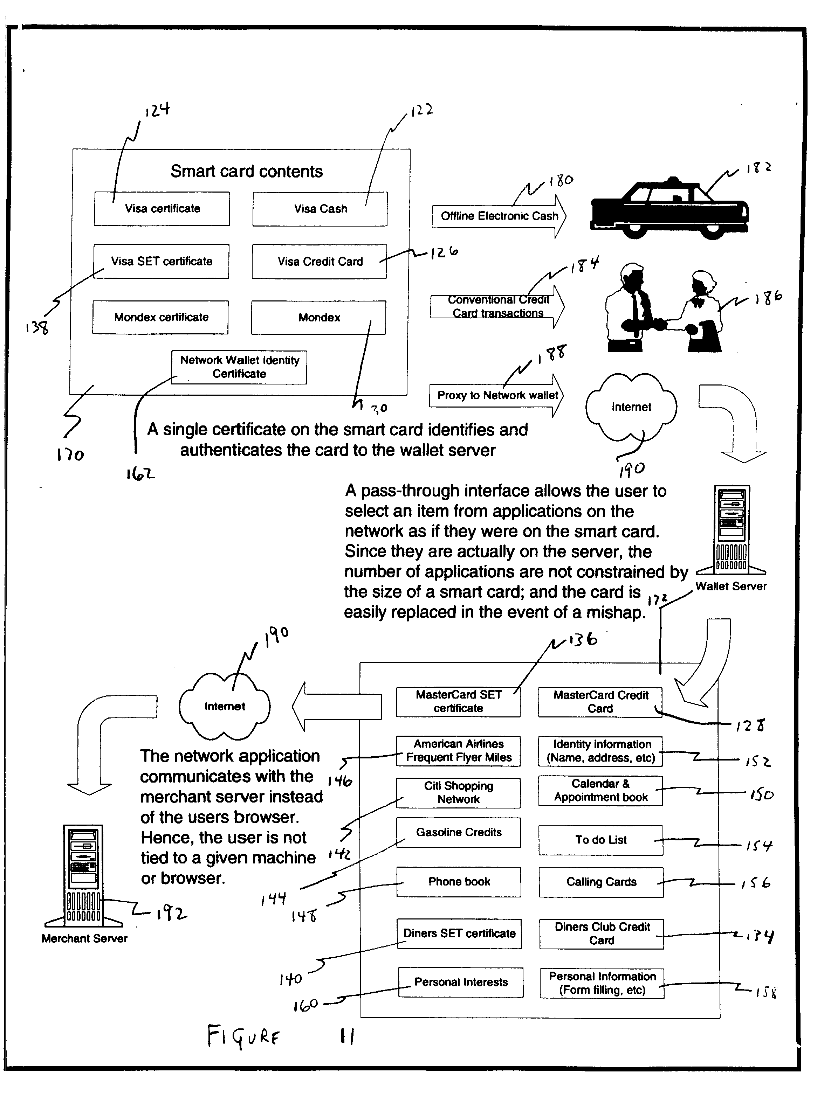

An example of an embodiment of a virtual wallet, and its use in commerce are described below and with reference to Figures 10 and 11.

The hybrid wallet is a combination of a smart card physically in possession of the user and a server based wallet. The wallet then has three distinct applications that allow it function both off-line and on-line for appropriate tasks.

The first area would be a stored value area or purse. This area would be able to dispense and track electronic cash off-line and would be re-loadable on-line.

The second area would essentially be equivalent to the magnetic strip on current cards, but allow the physical card to become a proxy for any of the cards contained in the wallet. This would allow purchases via the existing channels when the user is in physical stores. The account information would be mirrored on the server in case the card had to be replaced.

The third area represents the "rest" of the electronic wallet and is simply a entitlement that allows the holder to gain access to the wallet on the server. Such entitlements could be the form of crytograms, certificates, signed indica and the like. This provides the ability to have many wallet items when the actual resources of the cards are quite limited. Additionally, communication occurs between high-speed servers at higher bandwidths than would normally occur between a consumer's machine and a server, thus improving the overall performance.

Furthermore, should the card be lost, stolen, or destroyed, a new entitlement is easily reissued while the old one revoked. To illustrate, assume a worst case scenario that each wallet item requires its own certificate from each wallet item (application) vendor. If all of those entitlements were stored on a smart card, each vendor would have to be contacted to revoke and re-issue in the event of a card mishap. Storing the entitlements on the server avoids this complex problem and replaces it with the simple task of revoking and reissuing the one certificate that the wallet issuer has control over, the certificate to the network wallet. To the user of the wallet, where the contents actually reside may not be apparent. The *virtual* wallet appears to have all of its contents together.

The actual physical distribution of the contents, however, will be determined by what must be available off-line, and what can be resident on a server. The Figures 10 and 11 show some functionality on a smart card devoted to off-line (not on the Internet) transactions, and a single certificate to access the rest of the virtual wallet on the network.

Figure 10 provides a block diagram representing the contents of a virtual wallet. As shown in Figure 10 the owner of a virtual wallet may use the wallet to hold (contain) credit and debit cards, and related financial information. This financial currency includes in the present example, VISA® cash 122, VISA® certificates 124, VISA® credit card 126, MasterCard® credit card 128, Mondex credit 130, Mondex certificates 132, Diners Club credit card 134, MasterCard® SET certificate 136, VISA® SET certificate 138, Diners SET certificate 140. The financial currency may further include credits from selected vendors for example, Citi Shopping Network Credits 142 and Gasoline company credits 144. In addition, wallet 120 may include reward program information, such as frequent flyer miles, 146.

In addition to financial currency, the virtual wallet, 120 includes "information" currency relevant to the owner. Examples of information currency include a phone book 148, a calendar and appointment book 150, identity information 152, to do list 154, calling cards 156, personal information 158, personal interests 160 and a network wallet identity certificate 162.

Figure 11 depicts the physical embodiment of the virtual wallet 120 of the present example. As shown in Figure 11, the virtual wallet is a hybrid between a smart card 170 and a wallet server 172. Smart card 170 includes VISA® cash 122, VISA® SET certificate 138, VISA® certificates 124, VISA® credit card 126, Mondex credit 130, Mondex certificates 132 and network wallet identity certificate 162. The wallet server 172 includes MasterCard® credit card 128, Diners Club credit card 134, MasterCard® SET certificate 136, Diners SET certificate 140, phone book 148, a calendar and appointment book 150, identity information 152, to do list 154, calling cards 156, personal information 158, Citi Shopping Network Credits 142, gasoline company credits 144, frequent flyer miles, 146 and personal interests 160.

As depicted schematically in Figure 11, the owner of virtual wallet 120 may utilize the smart card portion, 170 to complete electronic cash transactions 180, for example to pay a taxi fare 182. Smart card 170 may also be utilized in credit card transactions, 184 and 186. Smart card 170 is also a proxy 188 to the server 172 or network portion of the wallet through the internet, 190. A pass through interface allows the user to select an item (information or financial currency) from applications on the wallet server as if they were on the smart card. Since the applications and currency reside on the server, the number is not constrained by the size of the smart card's memory, and the card is easily replaced in the event of a mishap.

Additionally functionality is provided by the wallet server 172 portion of the virtual wallet 120. The wallet server, or the smart card through an interface to the wallet server, may communicate through the internet to merchant servers 192 for the purchase of goods or financial services, or the exchange of information.

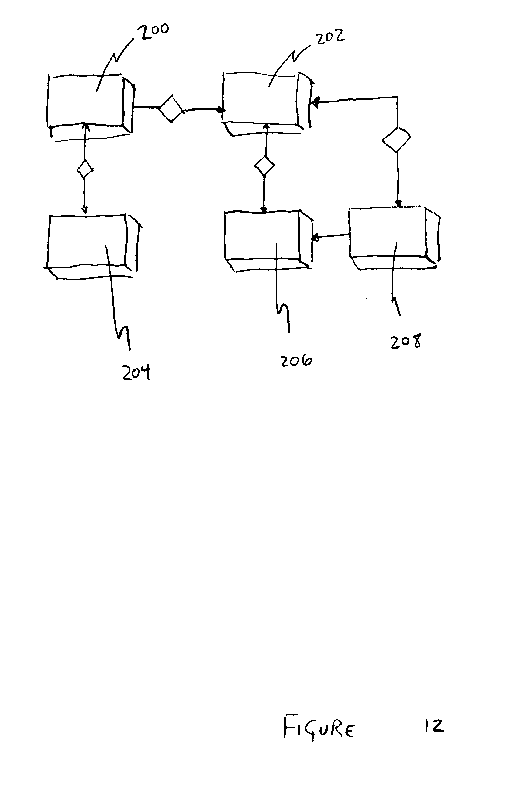

Features of virtual wallet 120 may be implemented utilizing a Java Wallet Model and the Java Electronic Commerce Framework (JECF). The JECF is a set of Java API's for commerce. The JECF defines objects for commerce messages and operations. A representative schematic is provided in Figure 12.

As shown in Figure 12, the JECF includes an operations registry, 200; protocol registry 202; user interface (UI) registry, 204; instrument registry 206; and instrument instances; 208.. The operations registry supports operations for example adding or subtracting value from a card. The protocol registry allows the framework to include protocols, like SET, that effects operations like payment authorization for a credit card. The instrument registry supports financial instruments such as stored values cards or credit cards that use an underlying protocol for communication. An instrument may choose among the protocols that support it. The UI registry allows the framework to switch between different user interfaces to control the underlying base set of operations. There is also an encompassing security model for communication between objects.

The flow of an instruction within JECF is, by way of example, as follows. A java commerce message (JCM) enters the JECF. The JECF looks up and instantiates operations (downloading components if necessary). The JECF looks up a current user interface associated with the operation and displays the user interface. The JECF adds operation to the user interface and waits for operation completion by the user. A user performs an operation, interacting with the user interface. When the operation is complete a string response is returned which is returned to the caller of the operation.

The functionality of the JECF may be utilized in virtual wallet 120 with other software to perform the functions described in the preceding sections.

Although the invention has been described with reference to these preferred embodiments and features, other similar embodiments and features can achieve the same results. Variations and modifications of the present invention will be apparent to one skilled in the art and the present disclosure is intended to cover all such modifications and equivalents.

## Claims

1. A virtual wallet system comprising a locally residing wallet portion, an external server residing wallet portion and an interface between the locally residing wallet portion and the external server residing portion.

2. The virtual wallet system of claim 1 wherein the wallet includes at least one of the following: payment mechanisms; identity authentication mechanisms; personal information; and electronic artifacts.

3. The virtual wallet system of claim 2 wherein the payment mechanisms comprise one or more of the following: bank account information, credit account information, electronic currency, electronic checks and debit cards.

4. The virtual wallet system of claim 2 wherein the identity authentication mechanisms comprise personal identification information and authentication information.

5. The virtual wallet system of claim 2 wherein personal information comprises one or more of the following: name, home address, work address, home phone, work phone, emergency contact information, personal phone numbers and addresses, appointments and reminders, personal preferences and interests and biometric information.

6. The virtual wallet system of claim 5 wherein personal identification information comprises one or more of the following: name, home address, work address, home phone, work phone, emergency contact information, and biometric information.

7. The virtual wallet system of claim 5 wherein authentication information comprises one or more of the following: certificates, access keys and biometric information.

8. The virtual wallet system of claim 2 wherein the electronic artifacts comprise one or more of the following: loyalty credits, coupons, pictures, tokens and tickets.

9. A system for electronic commerce utilizing a virtual wallet of claim 1.
